# FASCICULE DE BREVET EUROPEEN

(11) **EP 0 702 894 B1**
(45) Date de publication et mention de la délivrance du brevet: **19.01.2000**
(21) Numéro de dépôt: 95402138.2
(22) Date de dépôt: 22.09.1995
(51) Int. Cl.: A01K 1/02, A45C 3/00, A45C 5/14

(54) **Sac multiusage**
Mehrzwecktasche
Multipurpose bag

(30) Priorité: 23.09.1994 FR 9411363
(43) Date de publication de la demande: 27.03.1996
(73) Titulaire: Mercier, Marie-Madeleine, 92200 Neuilly sur Seine (FR); Ragonot, Christian, F-92200 Neuilly sur Seine (FR)
(72) Inventeur: Mercier, Marie-Madeleine, 92200 Neuilly sur Seine (FR); Ragonot, Christian, F-92200 Neuilly sur Seine (FR)
(74) Mandataire: Tanguy, Gilbert André

(56) Documents cités:
- DE-A- 1 913 431
- DE-C- 439 856
- FR-A- 2 354 727
- US-A- 2 170 379
- US-A- 2 784 890
- US-A- 3 850 144
- US-A- 4 112 991
- US-A- 4 977 857
- US-A- 5 170 745

## Description

L'invention se rapporte à un sac multiusage, c'est-à-dire comportant une structure de base et des accessoires permettant de le transformer en fonction des besoins de l'utilisateur et notamment de l'adapter au transport d'un animal de compagnie, comme par exemple un chat ou un chien de petite taille.

Les cabas ou sacs de grande taille sont généralement peu esthétiques. Si un tel sac est utilisé pour transporter des aliments périssables ou un animal (ce qui est obligatoire pour pouvoir emprunter les transports en commun), il est difficile à nettoyer. L'invention permet notamment de résoudre ces problèmes.

Un premier objet de l'invention est de proposer un sac multiusage, à la fois esthétique et pratique, facile à nettoyer et adapté au transport d'un petit animal.

Un second objet de l'invention est de proposer un sac qui puisse être modifié facilement en fonction des circonstances et/ou des souhaits de l'utilisateur, pour pouvoir être porté de différentes manières.

Plus précisément, l'invention concerne un sac multiusage comprenant un support constitué de trois panneaux : un panneau de fond et deux panneaux latéraux, lesdits panneaux étant raccordés entre eux pour former un ensemble à profil sensiblement en U, ouvert à deux extrémités et comprenant, en outre, au moins un conteneur venant s'adapter dans ledit support, caractérisé en ce que ledit conteneur comporte au moins un fond ajouré et en ce qu'un bac est prévu pour être intercalé entre ledit panneau de fond dudit support et ledit fond ajouré.

Le bac est, de préférence surmonté d'une plaque perforée, de dimensions correspondant sensiblement à celles du panneau de fond dudit support, ledit bac venant s'intercaler entre ledit panneau de fond dudit support et le fond ajouré dudit conteneur.

Selon une autre possibilité, le sac peut être complété par un socle à roulettes, amovible.

L'invention sera mieux comprise et d'autres avantages de celle-ci apparaîtront plus clairement à la lumière de la description qui va suivre d'un mode de réalisation actuellement préféré d'un sac multiusage conforme à son principe, donnée uniquement à titre d'exemple et faite en référence aux dessins annexés dans lesquels :
- la figure 1 est une vue en perspective éclatée d'un sac conforme à l'invention, montrant les éléments constitutifs de base de ce sac ainsi que ses principaux accessoires ;
- la figure 2 est une vue schématique en coupe transversale du sac illustrant l'implantation de certains accessoires lorsqu'on désire transporter un animal ;
- les figures 3 à 6 sont des vues schématiques illustrant diverses configurations possibles du sac.

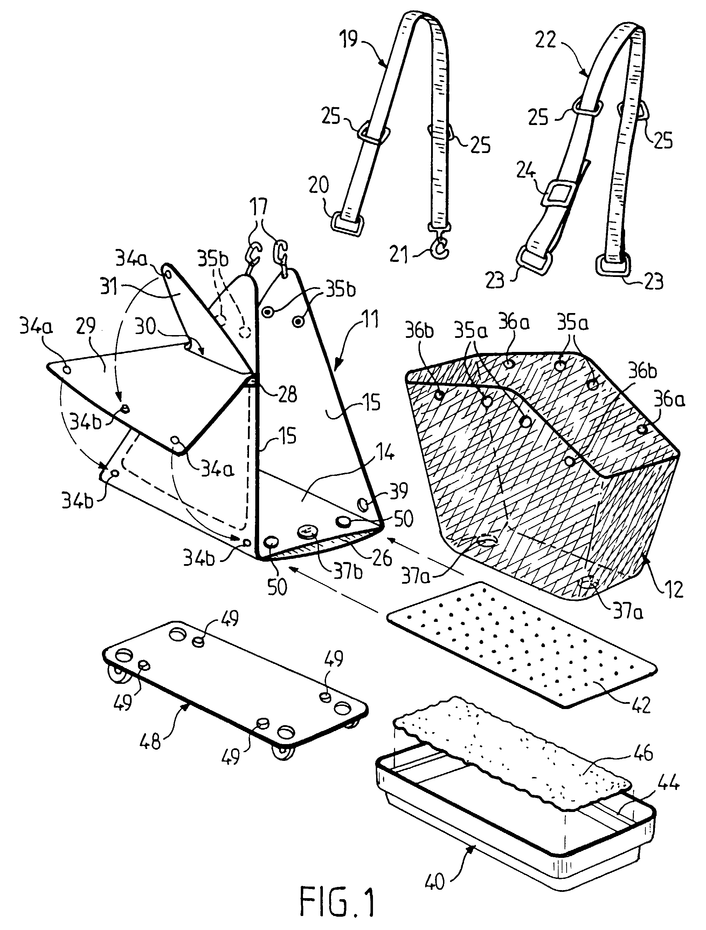

En se reportant plus particulièrement à la figure 1, on a représenté un sac multiusage conforme au principe de l'invention défini plus haut et comportant principalement un support 11 formant un ensemble à profil sensiblement en U et ouvert à deux extrémités opposées, ainsi qu'un conteneur 12 formant une sorte de réceptacle, ouvert à sa partie supérieure et venant s'adapter et se fixer dans ledit support. Plus précisément, le support 11 comprend trois panneaux raccordés entre eux par des articulations souples, pour former ledit ensemble à profil sensiblement en U. On distingue un panneau de fond 14 et deux panneaux latéraux 15 raccordés à deux bords longitudinaux dudit panneau de fond. L'ensemble du support est de préférence réalisé dans un matériau semi rigide, éventuellement avec un habillage de cuir ou de similicuir ou autre matériau adapté. Le conteneur 12 est généralement réalisé dans un matériau plus souple que celui qui constitue le support. Il peut par exemple être construit à partir d'une feuille de matière plastique ajourée ou en résille, quelque peu rigide ou bien être directement conformé de cette façon, par moulage. Il est spécialement indiqué de réaliser le conteneur 12, au moins partiellement en résille, en vue du transport d'un animal parce que ce dernier peut voir à l'extérieur et mieux respirer. Dans l'exemple représenté, les deux panneaux latéraux 15 sont sensiblement triangulaires et raccordés par leurs bases respectives aux deux bords longitudinaux du panneau de fond 14. Le sommet de chaque panneau latéral 15 est muni d'un crochet 17 du type mousqueton ou de tout autre moyen d'attache analogue.

Au moins une bretelle est prévue pour être raccordée aux crochets 17. On a représenté ici une bretelle 19 munie d'une boucle 20 à une extrémité et d'un crochet 21 du type mousqueton à son autre extrémité. Elle comporte aussi deux boucles intermédiaires 25 permettant lorsqu'elles sont utilisées, de limiter la longueur utile de la bretelle. Le sac comporte de préférence deux bretelles de ce genre. Il peut comporter en outre au moins une bretelle 22 munie d'une boucle 23 à chaque extrémité. Cette bretelle est de longueur ajustable grâce à une boucle intermédiaire 24. D'autres bretelles ou sangles diversement constituées, notamment de longueurs différentes, peuvent être prévues.

Le panneau de fond 14 comporte une double paroi ménageant un gousset 26 dans lequel on peut glisser une plaque de rigidification rectangulaire, notamment lorsque le sac est utilisé en tant que sac à provision ou pour transporter des objets pesants et/ou fragiles. Par ce moyen, on donne au sac une certaine forme et un certain volume intérieur et on évite, dans une certaine mesure, d'écraser son contenu.

L'un des panneaux latéraux 15 comporte plusieurs poches superposées. On peut ainsi distinguer une poche 28 pour certains accessoires, notamment les bretelles non utilisées, fermée par un rabat trapézoïdal 29 formant lui-même une poche 30 susceptible de contenir des documents. Le rabat 29 est articulé au panneau latéral 15 au-dessus de l'ouverture de la poche 28. Il est lui même recouvert d'un rabat triangulaire 31 dans l'exemple représenté protégeant l'accès de la poche 30. Le rabat 31 est fixé de la même façon au panneau 15. Les rabats 29 et 31 et le panneau 15 sont munis de dispositifs d'assemblage coopérants (de tout type connu) comme par exemple des boutons-pression mâles et femelles 34a, 34b. Bien entendu, les matériaux constituant le support 15, les rabats 29, 31 et le conteneur 12 peuvent être différents et leurs couleurs peuvent être variées pour donner au sac un aspect remarquable ou luxueux.

Le conteneur 12 et les deux panneaux latéraux 15 comportent aussi à leurs parties supérieures respectives des dispositifs d'assemblage coopérants, par exemple, encore, des boutons-pression mâles et femelles 35a, 35b. D'autres boutons-pression 36a, 36b, ou analogues sont prévus près des bords du conteneur pour refermer celui-ci. Le fond du conteneur 12 et le panneau de fond 14 du support 11 sont aussi munis de dispositifs d'assemblage coopérants 37a, 37b. L'un des panneaux latéraux 15, de préférence celui qui ne porte pas les poches et rabats décrits plus haut, comporte deux moyens d'attache 39, constitués par exemple par de simples perforations renforcées par bagues métalliques, disposés au voisinage des extrémités de sa base, comme représenté. Ils servent au raccordement des bretelles ou sangles dans certaines configurations du sac, comme on le verra plus loin.

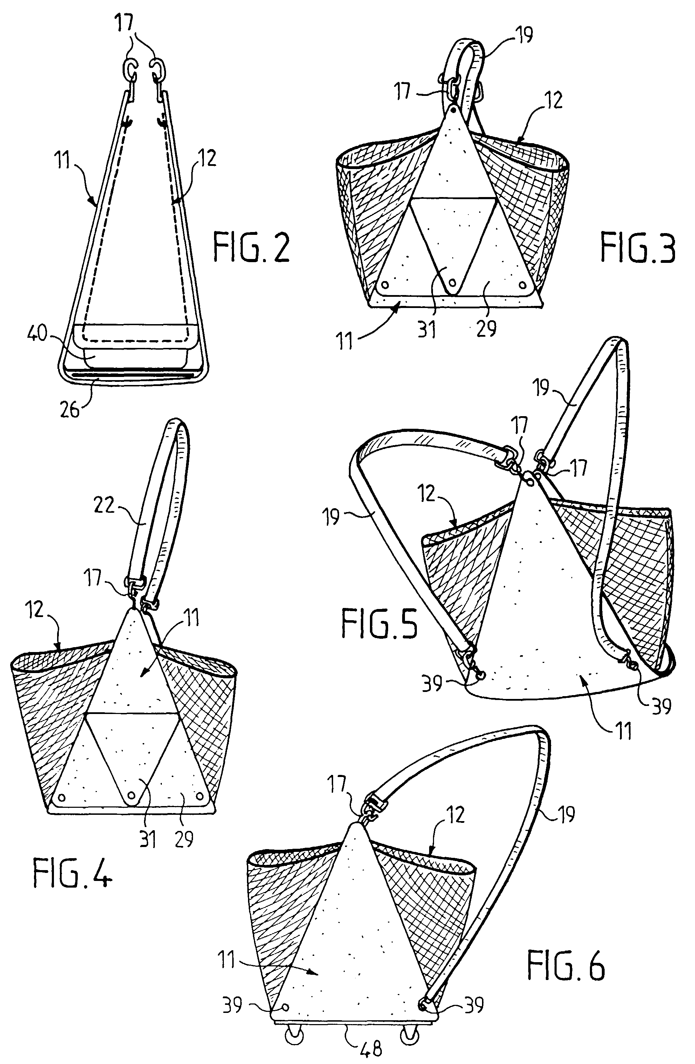

Selon une autre caractéristique intéressante de l'invention, le conteneur 12 comporte au moins un fond ajouré, ce qui est le cas ici puisqu'il est entièrement constitué en résille et on prévoit en outre un bac 40 plat, surmonté d'une plaque perforée 42 ou analogue, de forme et de dimensions correspondant sensiblement à celles du panneau de fond 14 dudit support. Comme on le voit sur la figure 2, ce bac 40 vient s'intercaler entre le panneau de fond 14 du support et le fond ajouré du conteneur 12, ce dernier venant reposer sur la plaque perforée. Des moyens de fixation, non représentés, sont de préférence prévus entre la paroi inférieure du bac 40 et le panneau 14. En outre, ledit bac 40 comporte un épaulement périphérique 44, intérieur, sur lequel repose la plaque perforée 42. Un bloc de matériau absorbant 46 est déposé au fond du bac sous la plaque perforée. Ce bloc peut être imprégné d'un produit désodorisant.

Dans cette configuration, le sac est bien adapté pour le transport d'un animal de petite taille, tel qu'un chien ou un chat. Les excréments sont récupérés dans le bac, notamment les urines sont absorbées par le bloc 46.

Enfin, il est à noter que le bac peut être complété par un socle à roulettes 48, rigide, amovible, susceptible d'être adapté sous le panneau de fond 14 du support 11. Pour la fixation, la planche rigide du socle peut être pourvue de trous 49 et le panneau de fond 14 peut aussi comporter des trous 50 correspondants. La fixation se fait alors par des vis ou éléments analogues. Les fixations peuvent aussi s'effectuer grâce à des éléments de tissu à boucles et crochets coopérants.

Notamment, les moyens de fixation entre la planche et le support peuvent être différentes et on peut prévoir des éléments de tissu à crochets et boucles coopérants rapportés respectivement sur le socle et le support. La plaque perforée 42 peut constituer la plaque de rigidification destinée à être engagée dans le gousset 26, lorsque le bac 40 n'est pas installé dans le sac. Ce bac ainsi que le conteneur 12 sont de préférence en matière plastique facilement lavable. Le nettoyage du support 11 ne pose aucun problème puisque celui-ci peut être mis à plat.

Les figures 3 à 6 illustrent différentes configurations possibles du sac permettant de le porter de différentes manières. Ainsi, sur la figure 3, la bretelle 19 est raccourcie au maximum (on peut aussi utiliser une bretelle plus courte) et ses deux boucles 25 sont accrochées aux mousquetons 17. Le sac peut être porté en sac à main. Dans la configuration de la figure 4, la bretelle 22 est utilisée et le sac peut être porté en bandoulière. Dans la configuration de la figure 5, on utilise deux bretelles 19 installées, chacune, entre un mousqueton 17 et l'un des moyens d'attache 39. Dans ce cas, le sac devient un sac à dos ou un sac ventral. Dans la configuration de la figure 6, le socle à roulettes 48 est installé sous le panneau de fond 14 et l'une des bretelles 19 est conservée pour le tirer au sol comme un chariot.

## Revendications

1. Sac multiusage comprenant un support (11) constitué de trois panneaux: un panneau de fond (14) et deux panneaux latéraux (15), lesdits panneaux étant raccordés entre eux pour former un ensemble à profil sensiblement en U, ouvert à deux extrémités et comprenant, en outre, au moins un conteneur (12) venant s'adapter dans ledit support, caractérisé en ce que ledit conteneur (12) comporte au moins un fond ajouré et en ce qu'un bac (40) est prévu pour être intercalé entre ledit panneau de fond (14) dudit support et ledit fond ajouré.

2. Sac multiusage selon la revendication 1, caractérisé en ce que ledit conteneur (12) est réalisé au moins en partie en résille.

3. Sac multiusage selon la revendication 1 ou 2, caractérisé en ce que ledit bac (40) comporte un épaulement périphérique (44) sur lequel repose une plaque perforée (42).

4. Sac multiusage selon la revendication 3, caractérisé en ce qu'un bloc de matériau absorbant (46) est déposé au fond dudit bac, sous ladite plaque perforée (42).

5. Sac multiusage selon l'une des revendications précédentes, caractérisé en ce que ledit panneau de fond (14) est agencé en gousset (26) et en ce qu'une plaque de rigidification est susceptible d'être glissée dans ce gousset.

6. Sac multiusage selon l'une des revendications précédentes, caractérisé en ce qu'il comporte en outre un socle à roulettes (48), amovible.

7. Sac multiusage selon l'une des revendications précédentes, caractérisé en ce que lesdits panneaux latéraux (15) sont sensiblement triangulaires.

8. Sac multiusage selon la revendication 7, caractérisé en ce qu'il comporte un moyen d'attache (17) à une extrémité supérieure de chaque panneau latéral (15).

9. Sac multiusage selon la revendication 8, caractérisé en ce que l'un des panneaux latéraux comporte deux moyens d'attache (39) au voisinage des extrémités de sa base.

## Patentansprüche

1. Multifunktions-Tragetasche, bestehend aus einem Traggestell (11), das aus drei Platten gebildet ist, einer Bodenplatte (14) und zwei Seitenplatten (15), die miteinander verbunden sind, um einen im wesentlichen U-förmigen Profilkörper zu bilden, der an den beiden Enden offen ist und außerdem einen Behälter (12) aufweist, der sich in das Traggestell einfügt,
**dadurch gekennzeichnet, daß**
der Behälter (12) wenigstens einen Lochboden aufweist, und daß eine Wanne (4) vorgesehen ist, um zwischen die Bodenplatte (14) des Traggestells und den Lochboden eingeschoben zu werden.

2. Multifunktions-Tragetasche nach Anspruch 1,
**dadurch gekennzeichnet, daß**
der Behälter (12) wenigstens teilweise aus einem Netzmaterial hergestellt ist.

3. Multifunktions-Tragetasche nach Anspruch 1 oder 2,
**dadurch gekennzeichnet, daß**
die Wanne (4) einen Umfangsbund (44) aufweist, auf dem eine Lochplatte (42) aufliegt.

4. Multifunktions-Tragetasche nach Anspruch 3,
**gekennzeichnet durch**
einen Block (46) aus absorbierendem Material, der auf dem Boden der Wanne unter der Lochplatte (42) angeordnet ist.

5. Multifunktions-Tragetasche nach Anspruch 4,
**dadurch gekennzeichnet, daß**
die Bodenplatte (14) als Schlauch (26) ausgebildet ist, und daß eine Verstärkungsplatte in den Schlauch geschoben werden kann.

6. Multifunktions-Tragetasche nach einem der vorherigen Ansprüche,
**dadurch gekennzeichnet, daß**
sie außerdem eine abnehmbare Grundplatte (48) mit Rollen aufweist.

7. Multifunktions-Tragetasche nach einem der vorherigen Ansprüche,
**dadurch gekennzeichnet, daß**
die Seitenplatten (15) im wesentlichen dreieckig sind.

8. Multifunktions-Tragetasche nach Anspruch 7,
**dadurch gekennzeichnet, daß**
sie eine Befestigungseinrichtung (17) am oberen Ende jeder Seitenplatte (15) aufweist.

9. Multifunktions-Tragetasche nach Anspruch 9,
**dadurch gekennzeichnet, daß**
eine der Seitenplatten zwei Befestigungseinrichtungen (39) nahe den Enden ihrer Basis aufweist.

## Claims

1. Multi-use bag comprising a support (11) consisting of three panels: a bottom panel (14) and two side panels (15), said panels being connected together in order to form an assembly with a substantially U-shaped profile, open at both ends and also comprising at least one container (12) fitting in said support, characterised in that said container (12) has at least one perforated bottom and in that a tray (40) is provided for insertion between said bottom panel (14) of said support and said perforated bottom.

2. Multi-use bag according to Claim 1, characterised in that said container (12) is produced at least partly from netting.

3. Multi-use bag according to Claim 1 or 2, characterised in that said tray (40) has a peripheral shoulder (44) on which a perforated plate (42) rests.

4. Multi-use bag according to Claim 3, characterised in that a block of absorbent material (46) is placed at the bottom of said tray, underneath said perforated plate (42).

5. Multi-use bag according to one of the preceding claims, characterised in that said bottom panel (14) is arranged in a gusset (26) and in that a stiffening plate is able to be slid into this gusset.

6. Multi-use bag according to one of the preceding claims, characterised in that it also includes a removable base with wheels (48).

7. Multi-use bag according to one of the preceding claims, characterised in that said side panels (15) are substantially triangular.

8. Multi-use bag according to Claim 7, characterised in that it includes an attachment means (17) at atop end of each side panel (15).

9. Multi-use bag according to Claim 8, characterised in that one of the side panels includes two attachment means (39) close to the ends of its base.
